# EUROPÄISCHE PATENTSCHRIFT

(11) **EP 1 340 352 B1**
(45) Veröffentlichungstag und Bekanntmachung des Hinweises auf die Patenterteilung: **25.05.2005**
(21) Anmeldenummer: 01989403.9
(22) Anmeldetag: 06.12.2001
(51) Int. Cl.: H04L 29/06, G06F 17/60, G10H 1/00

(54) **VERFAHREN UND VORRICHTUNG ZUM STEUERN DER ÜBERTRAGUNG UND WIEDERGABE VON DIGITALEN SIGNALEN**
METHOD AND DEVICE FOR CONTROLLING THE TRANSMISSION AND PLAYBACK OF DIGITAL SIGNALS
PROCEDE ET DISPOSITIF DE COMMANDE DE TRANSMISSION ET REPRODUCTION DE SIGNAUX NUMERIQUES

(30) Priorität: 08.12.2000 DE 10062514
(43) Veröffentlichungstag der Anmeldung: 03.09.2003
(73) Patentinhaber: AUDIANTIS GmbH, 10407 Berlin (DE)
(72) Erfinder: Horn, Raymond, D-12526 Berlin (DE); KORPAS, Andreas, 10407 Berlin (DE); GRÜNENBERG, Reginald, 10407 Berlin (DE)
(74) Vertreter: Hannig, Wolf-Dieter, Dipl.-Ing.
(86) Internationale Anmeldenummer: PCT/DE2001/004679
(87) Internationale Veröffentlichungsnummer: WO 2002/047354

(56) Entgegenhaltungen:
- DE-A- 19 842 803
- US-A- 5 734 119
- US-A- 6 009 410

## Beschreibung

Die Erfindung betrifft ein Verfahren zum Steuern der Übertragung und Wiedergabe kodierter, digitaler Signale, insbesondere komprimierter Ton-, Musik-, Bild- und/oder Sprachsignale, die in einer oder mehreren Datenquelle(n) zum Abruf über ein oder mehrere Steuerkommando(s) durch ein oder mehrere Abspiel- bzw. Empfangsgeräte bei einem Anwender bereitgehalten werden, wobei zunächst vom Anwender vorgegebene Informationsprofile zu einer Benutzerschnittstelle und darauffolgend durch ein Steuerkommando des Anwenders ausgelöst die diesen vorgegebenen Informationsprofilen entsprechenden digitalen Signale von der Datenquelle an den Anwender gesendet, diese Signale durch einen Dekoder wiedergegeben und die Bereitstellung der digitalen Signale im Server durch den Anwender mittels der Benutzerschnittstelle interaktiv gesteuert werden.

Die Erfindung betrifft ferner eine Vorrichtung zur Durchführung des Verfahrens zum Steuern der Übertragung und Wiedergabe kodierter digitaler Signale zwischen mindestens einem Empfangsgerät und mindestens einer Datenquelle über eine Datenübertragungsverbindung und deren Wiedergabe, wobei das Empfangsgerät mindestens eine durch externe Daten konfigurierbare Benutzerschnittstelle, eine Vorrichtung zum Aufnehmen eines von außen zugespielten Dekoders und eine den digitalen Signalen entsprechende Ausgabeschnittstelle enthält und die Datenquelle mindestens ein die Steuerbefehle auswertendes Steuerinterface, einen Massenspeicher für die Signaldaten, ein Datenauswahlsystem und einen Enkoder zum Komprimieren der Daten enthält.

Der typische Anwendungsfall der Erfindung ist die Ergänzung von Internetseiten durch interaktive Audioinhalte. Internetseiten bestehen bekanntlich aus HTML-Dateien, die das Layout vorgeben, und optional aus Bilddateien. Diese Dateien werden überwiegend von http-Servern bereitgestellt, die mit dem Internet verbunden sind. Ausgewertet und angezeigt werden die Dateien mit HTML-Browsern, beispielsweise "Netscape Navigator" der Firma Netscape oder "Internet Explorer" der Firma Microsoft. Der Browser lädt alle Dateien aus dem Internet herunter und zeigt diese anschließend auf dem Monitor des Anwenders an.

Dieser bekannte Stand der Technik ist nur bedingt für die Übertragung von Audio- oder Video-Signalen geeignet, da die zu übertragende Datenmenge zu groß ist und in die darzustellende Internetseite integriert sein muss. Die Ladezeit für einen Hintergrundsound oder eine Radiosendung mit einer unendlich langen Spielzeit ohne Wiederholungen führt zu einer unendlichen langen Ladezeit, bevor eine Wiedergabe starten könnte.

Integriert wird dieser Stand der Technik in gängige Webbrowser durch kleine Programme, sogenannte "Plug-Ins" wie beispielsweise "Schockwave/Flash-Plug-In". Diese ermöglichen, aufwendige 3D-Animationen und Vektorgrafiken anzuzeigen sowie Sound und Musik wiederzugeben. Dazu müssen jedoch alle Inhalte, die innerhalb einer Internetseite für Anwender dargestellt werden könnten, in diese Internetseite integriert sein, z.B. 80 verschiedene Sounddaten, wenn der Anwender zu 80 verschiedenen Flächen der dargestellten Seite unterschiedliche Sounds präsentiert bekommen soll (z.B. Buttonsounds). Alle diese Daten müssen vorab geladen werden, unabhängig davon, ob sie vom Anwender tatsächlich ausgewählt werden.

Lange Ladezeiten versucht eine andere Methode (US 5734119A1, US 6009410A1) durch das sogenannte "Streamen" zu vermeiden, bei dem die bereits empfangenen Audio- und Videodaten sofort wiedergegeben, während die nächsten Daten empfangen werden. Die Anzeige der Internetseite und das Abspielen des Audio- und Video-Streams erfolgen völlig unabhängig voneinander. Dieses quasi parallele Wiedergeben von Bild und Ton ist jedoch mit dem Nachteil verbunden, dass für das Abspielen des Streams zusätzlich zum Browser ein externer Player notwendig wird. Des weiteren kann der Audio- und/oder Video-Stream nicht bzw. nur stark begrenzt über die Internetseite interaktiv gesteuert werden. Hierfür stellt der Player ein zusätzliches Benutzerinterface bereit. Mit diesem wird jedoch lediglich die Wiedergabe im Empfangsgerät gesteuert. Die Steuerungsmöglichkeiten der bereitgestellten Daten in der Quelle beschränken sich auf Starten und Stoppen des Datenstromes.

Weiterhin funktionieren derartige Plug-Ins and Player erst nach Herunterladen und Installation durch den Anwender, was die Bedienung deutlich erschwert. Dieser Download- und Installationsprozess ist oftmals sehr kompliziert und übersteigt häufig die Fähigkeiten des Anwenders. Weigert sich der Anwender ein Plug-In oder einen Player herunterzuladen, führt dies zu dem Nachteil, dass Teile der Internetseite nicht funktionieren und der Anwender häufig nicht in der Lage ist, die Internetseite überhaupt zu nutzen. Viele Internetanbieter stellen daher zwei Versionen ihrer Internetseiten bereit, mit oder ohne Nutzung von Flash. Für den Webdesigner ist die Handhabung der Plug-In und Player ebenfalls aufwendig und kompliziert. Ein Flash wird beispielsweise mit einem speziellen Werkzeug (Tool) erstellt und dann in die Internetseite eingebunden. Bei Internetseiten mit Autorensystem, deren Inhalt sich häufig ändert, muss das Flash mit Hilfe des Tools angepasst werden. Diese Arbeit ist sehr zeitaufwendig und führt sehr häufig zum Verzicht auf solche Plug-Ins.

Aus der DE 198 42 803 A1 ist eine Vorrichtung und ein Verfahren zur Generierung und Verbreitung von individuellen Multimediabotschaften bekannt. Bei der hier offenbarten Lösung handelt es sich um ein Zusammenstellen verschiedener, statisch in einem Speicher gehaltener Multimediainhalte. Dies geschieht "offline", d.h. der Anwender baut eine Botschaft auf seinem Computer zusammen, die er nach Fertigstellung, beispielsweise mittels e-mail, verbreitet. Ein Zusammenmischen und ein Beeinflussen von Daten, Informationen bzw. Signalen außerhalb des Client-Computers findet nicht statt. Eine Reaktion des Anwenders in Echtzeit kann deshalb mit diesem Stand der Technik nicht erfolgen.

Bei diesem Stand der Technik liegt der Erfindung die Aufgabe zugrunde, die Übertragung und Wiedergabe von digitalen Signalen, insbesondere Ton-, Musik- und Sprachsignale, direkt durch den Anwender in der die Daten bereithaltenden Quelle unter Vermeidung aufwendiger Installationsprozesse online zu steuern.

Diese Aufgabe wird durch ein Verfahren der eingangs genannten Gattung mit den kennzeichnenden Merkmalen des Anspruches 1 und durch eine Vorrichtung mit den kennzeichnenden Merkmalen des Anspruches 9 gelöst.
Vorteilhafte Ausgestaltungen des Verfahrens und der Vorrichtung sind den Unteransprüchen entnehmbar.

Das erfindungsgemäße Verfahren zeichnet sich vor allem dadurch aus, dass es erstmals möglich wird, die Wiedergabe von Audio- und Video-Dateien durch die Internetseite aktiv zu steuern. Die benötigten Daten zur Echtzeitwiedergabe von z.B. Ton, Musik und Sprache sind nicht Bestandteil der Internetseite, sie werden also nicht zeitaufwendig vorab übertragen. Statt dessen werden sie vom Server nur bei gewünschter Wiedergabe übermittelt. Alle für das Abspielen der Audio-Dateien notwendigen Erweiterungen werden über das Internet vom Server bereitgestellt, wenn der Anwender die Internetseite aufruft. Der Anwender ist nicht mehr gezwungen, entsprechende Erweiterungen auf seinem Computer zu installieren. Der Audio-Stream wird interaktiv auf den Anwender zugeschnitten, indem auf vom Anwender erzeugte Befehle, z.B. das Klicken einer Maustaste oder dem Herüberfahren mit dem Mauszeiger über einen Button oder Link, mit dem Abspielen einer bestimmten Musik, eines Tones oder mit Sprache reagiert wird. Dem Anbieter einer Internetseite wird zudem die Möglichkeit gegeben, aktiv ergänzende Informationen zu übermitteln, z.B. die Einblendung eines Werbespots.
Durch das erfindungsgemäße Verfahren ergibt sich für den Webdesigner die Möglichkeit, eine Internetseite mit Klängen, Musik und Sprache an den verschiedensten Stellen der Seite auszustatten, ohne die Übertragungs- und Darstellungsgeschwindigkeit zu verschlechtern.

Die erfindungsgemäße Vorrichtung zur Durchführung des Verfahrens ist einfach im Aufbau und erfordert keine gesonderten Installationsprozesse beim Anwender.

Weitere Vorteile und Einzelheiten ergeben sich aus der nachfolgenden Beschreibung unter Bezugnahme auf die beigefügten Zeichnungen.

Die Erfindung soll nachstehend an zwei Ausführungsbeispielen näher erläutert werden.

Es zeigen:
- Fig. 1: die Integration von Ton und Video in eine Internetseite nach dem Stand der Technik mittels Plug-In,
- Fig. 2: das Streamen von Audio und Video nach dem Stand der Technik und
- Fig. 3: ein Blockdiagramm des Aufbaus der erfindungsgemäßen Vorrichtung zum Durchführen des erfindungsgemäßen Verfahrens.

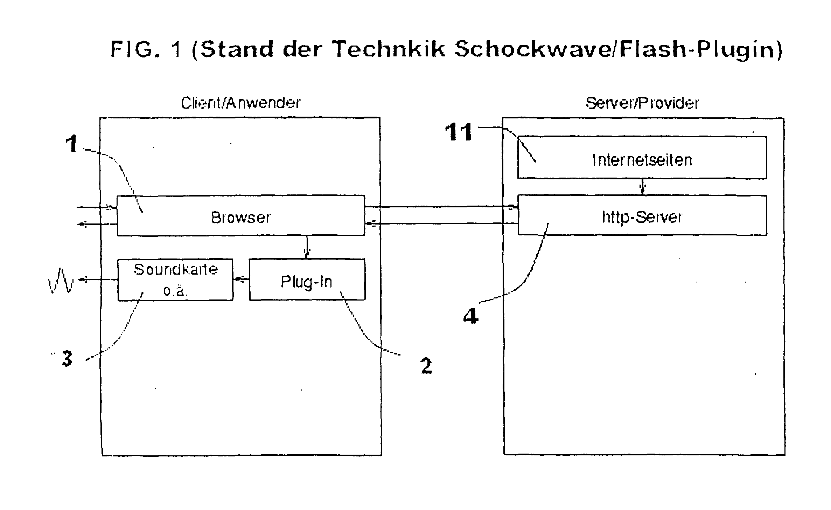

Die Fig. 1 zeigt die Integration von Ton- und Videosignalen nach dem Stand der Technik in gängige Webbrowser durch kleine Programme, den sogenannten Plug-Ins 2, wie beispielsweise Schockwave/Flush-Plug-In. Diese ermöglichen, 3D-Animationen und Vektorgrafiken anzuzeigen sowie Sound und Musik über Schnittstellen, beispielsweise eine Soundkarte im Personalcomputer **3**, wiederzugeben. Die Darstellung in Fig. 1 beschränkt sich der Einfachheit halber auf die Musikwiedergabe. Dazu müssen jedoch alle Inhalte, die innerhalb einer Internetseite **11** für den Anwender dargestellt werden könnten, in diese Internetseite integriert sein. Alle diese Daten werden vorab geladen, unabhängig davon, ob der Anwender diese dann auswählt. Wählt der Anwender, der ein entsprechende Plug-In installiert hat, über seinen Internetbrowser **1** eine Internetseite, dann wird diese Internetseite von dem http-Server **4** aus den Internetseiten **11** des Servers ausgewählt, an den Browser 1 übertragen und dargestellt. Der Browser 1 übergibt die Daten, die eine Verarbeitung durch das Plug-In erfordern an das Plug-In **2**. Audiosignale werden über die Soundkarte abgespielt. Für Grafikanimationen werden die entsprechenden Animationsbilder von dem Plug-In berechnet und in gleichmäßigen Zeitschritten an den Browser **1** zur Darstellung übergeben. Dies ist in Fig. 1 nicht gezeigt. Da eine Internetseite, die ein Flush-Plug-In unterstützt, deutlich mehr Daten enthält als eine vergleichbare reine HTML-Datei und somit unerwünscht hohe Ladezeiten verursacht, bieten viele Betreiber von Webseiten alternativ Webseiten ohne Flash an. Dies führt zu einem signifikant hohen Verwaltungsaufwand.

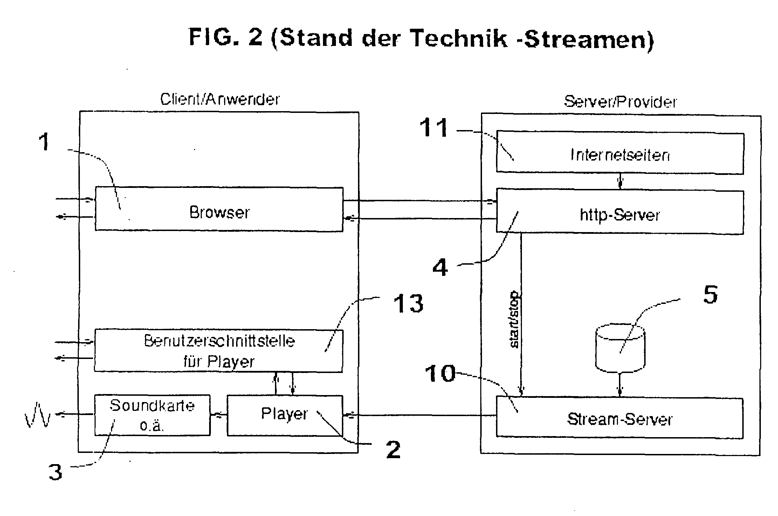

In Fig. 2 ist die Stream-Methode nach dem Stand der Technik näher dargestellt. Die Anzeige einer von einem http-Server **4** bereitgestellten Internetseite erfolgt auch hier über einen Internetbrowser **1**. Die Audio- und Video-Streams werden unabhängig vom Browser **1** über einen zuvor installierten Player **2** (Fig. 2 zeigt die Audiowiedergabe über eine Soundkarte **3**) abgespielt. Die Auswahl eines auf dem Server **4**, beispielsweise auf einer Festplatte **5,** befindlichen Audiound/oder Video-Streams, geschieht über die im Internetbrowser **1** dargestellte und entsprechend gestaltete Internetseite **11.** Ein Streamserver **10**, der von dem http-Server **4** die entsprechende Anweisung erhält, sendet daraufhin die ausgewählte und auf der Festplatte **5** gespeicherte Datei in einem festen Zeitraster an den Player **2**. Die Steuerungsmöglichkeiten der bereitgestellten Daten in der Quelle über den Browser **1** beschränken sich auf das Starten und Stoppen des Datenstromes, da der Streamserver **10** im wesentlichen als Datenpumpe arbeitet. Die interaktive Steuerung der Daten erfolgt über ein zusätzliches Benutzerinterface **13** des Players **2**. Mit diesem wird jedoch lediglich die Wiedergabe im Empfangsgerät gesteuert.

### Beispiel 1

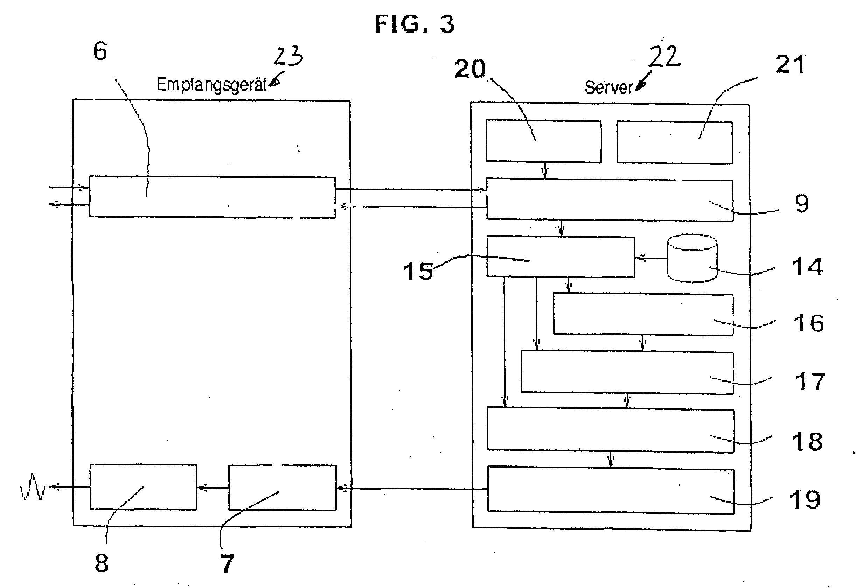

In die aktuell existierende Internetinfrastruktur soll die in Fig. 3 gezeigte erfindungsgemäße Vorrichtung integriert werden.
Das Steuerinterface **9** wird im Server durch einen http-Server realisiert. Dieser http-Server ist um ein Dateiauswahlsystem (File-Server) **15**, für gepackte Klang-, Ton-, Musik- und Sprachfiles (Audiofiles), einen vom Dateiauswahlsystem **15** verwalteten Massenspeicher **14** (beispielsweise einer Festplatte), einen Dekoder **16** zum Entpacken der gespeicherten Audio-Files zu einem komprimierten Paket, einen Enkoder **18** zur Datenkompression und einen Stream-Server **19** zum Senden des Paketes an den Anwender erweitert. Die konfigurierbare Benutzerschnittstelle **6** im Empfangsgerät **23** ist durch einen handelsüblichen Internetbrowser **1** realisiert. Dieser erhält vom Server **22** ein Informationsprofil **20** in Form einer Internetseite im HTML-Format vom Steuerinterface **9** übermittelt und baut daraus die gewünschte Schnittstelle **6** zum Anwender auf. Mit der Übertragung der Internetseite sendet das Steuerinterface **9** bei Bedarf auch einen übertragbaren Dekoder **21**, der sich von dem im Server installierten Dekoder **16** unterscheidet und den weitverbreiteten Standard MP3 nutzt, an das Empfangsgerät, in dem dieser automatisch installiert wird. Hierzu sind in der Internetseite JavaScript-Funktionen eingebaut, die vom beim Anwender vorhandenen Browser unterstützt werden. Der Anwender nimmt davon nur den Browser und die dargestellte Internetseite **11** wahr. Der Anwender kann dann, z.B. durch Mausbewegungen, Anweisungen geben, die als entsprechende Steuerbefehle an das Steuerinterface **9** im Server gesendet werden. Im Server **22** wird mittels der Komponenten Dateiauswahlsystem **15**, Dekoder **16**, Mischer **17**, Enkoder **18** und Stream-Server **20** ein den Anweisungen des Anwenders entsprechend zusammengestellter Datenstrom erzeugt und an das Empfangsgerät **23** gesendet. Der Enkoder **18** generiert dabei ein Datenformat, der vom Dekoder **21** im Empfangsgerät dekodierbar ist, z.B. MP3.
Die empfangenen Daten werden vom Dekoder 2 im Empfangsgerät in ein auf dem Empfänger darstellbares Format gewandelt und einer entsprechenden Ausgabeschnittstelle **8**, beispielsweise einer Soundkarte, übergeben. Die Übertragung von Ton, Musik oder Sprache erfolgt durch eine Kodierung der Audio-Daten in einem Transferformat, beispielsweise MP3. Da der Enkoder **18** und der übertragbare Dekoder **21** als eigenständige Module in die Erweiterung des Servers integriert sind, lassen sich alle geeigneten Formate verwenden, so dass bei Änderung des Formats keine Änderungen an der Softwareinstallation im Empfangsgerät erforderlich ist.

### Beispiel 2

Die erfindungsgemäße Lösung soll mit einem mobilen Empfangsgerät, beispielsweise einem Handy, realisiert werden.

Die im Server gespeicherten Informationsprofile der Benutzerschnittstelle sind in diesem Beispiel die Strukturbeschreibung eines Auswahlmenüs, die von dem Steuerinterface **9**, z.B. einem WAP-Server, an das Empfangsgerät übertragen werden. Im Empfangsgerät erzeugt die konfigurierbare Benutzerschnittstelle **6**, hier ein WAP-Browser, das durch die Informationsprofile **20** beschriebene Menü. Der Ablauf des erfindungsgemäßen Verfahrens und die weiteren Komponenten der erfindungsgemäßen Vorrichtung sind identisch mit denen im Beispiel 1. Die Ausgabeschnittstelle **8** zur Audiowiedergabe wird im vorliegenden Beispiel von dem im Handy installierten Soundchip realisiert. Gerade im mobilen Einsatz ist zu erwarten, dass mittelfristige Geräte auf dem Markt kommen, die über einen vorinstallierten Dekoder **7**, beispielsweise nach dem MP3-Standard, verfügen, der dann genutzt werden kann.

### Aufstellung der verwendeten Bezugszeichen

- Internetbrowser: 1
- Player: 2
- Soundkarte: 3
- http-Server: 4
- Massenspeicher: 5
- konfigurierbare Benutzerschnittstelle: 6
- Dekoder: 7
- Ausgabeschnittstelle: 8
- Steuerinterface: 9
- Streamserver: 10
- Internetseite/: 11
- Benutzerschnittstelle für Player: 12
- Steuerinterface: 13
- Massenspeicher: 14
- Dateiauswahlsystem: 15
- Dekoder: 16
- Mischer: 17
- Enkoder: 18
- Streamserver: 19
- vorgegebene Informationsprofile: 20
- übertragbarer Dekoder: 21
- Server: 22
- Empfangsgerät/Anwender: 23

## Patentansprüche

1. Verfahren zum Steuern der Übertragung und Wiedergabe kodierter, digitaler Signale, insbesondere komprimierter Ton-, Musik-, Bild- und/oder Sprachsignale, die in einer oder mehreren Datenquelle(n) zum Abruf über ein oder mehrere Steuerkommando(s) durch ein oder mehrere Abspiel- bzw. Empfangsgerät(e) bei einem Anwender bereitgehalten werden, wobei zunächst vom Anwender vorgegebene Informationsprofile zu einer Benutzerschnittstelle und darauffolgend durch ein Steuerkommando des Anwenders ausgelöst die diesen vorgegebenen Informationsprofilen entsprechenden digitalen Signale von der Datenquelle an den Anwender gesendet, diese Signale durch einen Dekoder wiedergegeben sowie die Bereitstellung der digitalen Signale durch den Anwender mittels der Benutzerschnittstelle interaktiv gesteuert werden, **dadurch gekennzeichnet, dass** die Signale gemäß Anforderung durch den Anwender in der oder den Quelle(n) gemischt und diese gemischten Signale als ein neuer Datenstrom neuen Inhalts in Echtzeit übertragen werden, mit folgenden in der oder den Datenquelle(n) kontinuierlich ablaufenden Schritten:
a) Auswahl der die angeforderten digitalen Signale enthaltenen Dateien in der oder den Quelle(n);
b) Zerlegen der die angeforderten digitalen Signale enthaltenen Dateien in Einzelpakete und optionales Dekodieren;
c) digitales Mischen aller zeitgleich an den Empfänger zu übermittelnden Datenpakete zu einem oder mehreren neuen Datenpaket(en)
d) Kodieren jedes Datenpaketes in einem festen zeitlichen Raster und Senden an den Empfänger in Echtzeit.

2. Verfahren nach Anspruche 1, **dadurch gekennzeichnet, dass** die Datenkodierung in der Quelle entsprechend der verfügbaren Übertragungsbandbreite eingestellt und optional nachgeregelt wird.

3. Verfahren nach Anspruche 1, **dadurch gekennzeichnet, dass** die Wiedergabe des Datenstromes von einer Datenquelle ohne Zeitverzögerung durch Umschaltung auf einen Datenstrom einer dritten Quelle ersetzt wird.

4. Verfahren nach Anspruch 1 bis 3, **gekennzeichnet durch** folgende in der Datenquelle und beim Anwender/Empfänger zusätzlich ablaufende Schritte:
a) Anfordern der Informationsprofile zur Benutzerschnittstelle **durch** den Empfänger;
b) Übertragen der Informationsprofile zur Benutzerschnittstelle an den Empfänger und Aufbau der Benutzerschnittstelle;
c) Auslösen und Senden eines Steuerkommandos zum Abruf eines in der Datenquelle gespeicherten digitalen Signales **durch** den Empfänger;
d) optionales Übertragen der Dekodersoftware in das Empfangsgerät des Anwenders;
e) Empfang der Datenpakete unter optionaler Zwischenpufferung;
f) Dekodieren der empfangenen kodierten, digitalen Signale;
g) Wiedergabe der digitalen Signale im entsprechenden Darstellungsformat für den Anwender.

5. Verfahren nach Anspruch 1, **dadurch gekennzeichnet, dass** eine Auswahl der digitalen Signale nicht durch einen Steuerbefehl des Anwenders, sondern durch einen anderen Auswahlmechanismus in der Datenquelle erfolgt.

6. Verfahren nach Anspruch 4 oder 5, **dadurch gekennzeichnet, dass** beim Übertragen mindestens eines digitalen Signales in der Datenquelle und beim Anwender/Empfänger zusätzlich folgende Schritte ablaufen:
aa) Senden eines Steuerkommandos zum Abruf eines weiteren in der Datenquelle gespeicherten digitalen Signals durch den Empfänger;
bb) Auswahl der die angeforderten digitalen Signale enthaltenen Datei;
cc) Zerlegen der die angeforderten digitalen Signale enthaltenen Dateien in Einzelpakete und optionales Dekodieren;
dd) Ausführen der Schritte e) bis g).

7. Verfahren nach Anspruch 6, **dadurch gekennzeichnet, dass** die Auswahl gemäß Schritt bb) nicht durch einen Steuerbefehl des Anwenders, sondern durch einen anderen Auswahlmechanismus in der Datenquelle erfolgt.

8. Verfahren nach einem oder mehreren der Ansprüche 1 bis 7, **dadurch gekennzeichnet, dass** durch einen Steuerbefehl des Anwenders oder einen anderen Auswahlmechanismus in der Datenquelle die gemischten oder übertragenen digitalen Signale aus der Bearbeitung und Übertragung entfernt werden.

9. Vorrichtung zur Durchführung des Verfahrens nach Anspruch 1, zum Steuern der Übertragung und Wiedergabe kodierter digitaler Signale zwischen mindestens einem Empfangsgerät **(23)** und mindestens einer Datenquelle über eine Datenübertragungsverbindung und deren Wiedergabe, wobei das Empfangsgerät **(23)** mindestens eine durch externe Daten konfigurierbare Benutzerschnittstelle **(6),** eine Vorrichtung zum Aufnehmen eines von außen zugespielten Dekoders **(7)** und eine den digitalen Signalen entsprechende Ausgabeschnittstelle **(8)** enthält und die Datenquelle mindestens ein die Steuerbefehle auswertendes Steuerinterface **(9)**, einen Massenspeicher **(14)** für die Signaldaten, ein Datenauswahlsystem **(15)** und einen Enkoder **(18)** zum Komprimieren der Daten enthält, **dadurch gekennzeichnet, dass** die Datenquelle zusätzlich durch mindestens einen Mischer **(17)** zum Mischen mehrerer digitaler Signale erweitert ist und einen Streamserver **(19)** zum Senden der kodierten, digitalen gemischten Signale an das Empfangsgerät **(23)** enthält.

10. Vorrichtung nach Anspruch 9, **dadurch gekennzeichnet, dass** die Datenquelle zusätzlich durch mindestens einen Dekoder **(16)** erweitert ist, der es ermöglicht kodierte (i. allg. komprimierte) Signale im Massenspeicher **(14)** bereit zu halten.

11. Vorrichtung nach Anspruch 9, **dadurch gekennzeichnet, dass** die Kodierung der bereitgehaltenen Signale gegenüber der Kodierung der Kodierung für die Übertragung verschieden ist.

## Claims

1. Method of controlling the transmission and playback of digital coded signals, especially compressed sound signals, music signals, image signals and/or voice-signals, which are held in readiness in one or more data sources to be called up by one or more control commands through one or more playback device(s) with an user, wherein predetermined information profiles are sent to a user interface and than following the corresponding digitals signals are sent from the data source to the user as triggered by a control command from the user, these digital signals are reproduced using a decoder and the preparation of the digital signals is controlled by the user through a user interface in an interactive manner, **characterized in that** the signals based upon request from the user are mixed in the source(s) and these mixed signals are transferred in a real-time as a new data stream with a new content with following steps simultanous running up in the data source(s):
a) selecting the files containing the requested digitals signals in the source or the sources;
b) decompositing the files containing the requested digitals signals into individual packets and optionally decoding them,
c) digitally mixing all data packets simultaneous received to one or more new data packets;
d) coding each data packet in a fixed time grid and transmitting it to the receiver in the real-time.

2. Method according to claim 1, **characterized in that** the data coding in the source is set in correspondence with the available transmission band width and optionally readjusted afterward.

3. Method according to claim 1 **characterized in that** the reproduction of the data stream from one data source is replaced by switching over to a data stream of a third source.

4. Method according to claim 1 to 3, **characterized by** following steps running up subsequent in the data source and by the user/receiver:
a) requesting the information profiles for the user interface through the receiver;
b) transmitting the information profiles to the user interface at the receiver and configuring the user interface;
c) triggering a control command and transmitting it for calling up the stored digital signal in the data source through the receiver;
d) optionally transmitting the decoder software to the receiving device of the user;
e) receiving the data packets with optional intervening buffering;
f) decoding the received coded digital signals;
g) reproducing the digital signals in a corresponding presentation format for the user.

5. Method according to claim 1, **characterized in that** the selection of the digital signals is not effected by a control command of the user but rather by another selection mechanism in the data source.

6. Method according to claim 4 or 5, **characterized in that** the transmission of at least a digital signal in the data source and at the user/receiver, the following subsequent steps occur:
aa) trasmitting a control command for calling up a further digital signal stored in the data source by the receiver;
bb) selecting the file containing the requested digital signals;
cc) decomposing the file containing the requested digital signals into the individual packets and an optionally decoding;
dd) carrying out the steps e) to g).

7. Method according to claim 6, **characterized in that** the selection according to step bb) is not effected by control command of the user but rather by another selection mechanism in the data source.

8. Method according to one or more of the claims 1 to 7, **characterized in that** through a control command of the user or another selection mechanism the mixed transmitted digital signals are removed from the the processing and transmission.

9. Device for carrying out the method according to claim 1 for control of the transmission and reproducing of coded digital signals between at least a receiving device (23) and at least a data source over a data trasmission conncetion and its reproduction, wherein the receiving device (23) comprises at least one user interface (6) configurable by external data, a device for accommodating a decoder (7) from an external source, and an output interface (8) appropriate for the digital signals, and wherein the data source comprises at least one control interface (9) for evaluation of the control commands, a mass storage (14) for signals files, a data selection system (15) and an encoder (18) for compression of the data, **characterized in that** the data source is additionally expanded by at least one mixer (17) for mixing a plurality of digital signals, and a stream server (19) for transmitting the coded digital signals to receiving device (23).

10. Device according to claim 9, **characterized in that** the data source is expanded by at least a decoder (16) which enables coded (generally compressed) signals to be held in readiness in the mass memory (14).

11. Device according to claim 9, **characterized in that** the coding of the signals held in readiness differs from the coding of the coding for transmission.

## Revendications

1. Procédé pour la commande de la transmission et de la restitution de signaux numériques codés, en particulier de signaux comprimés de son, de musique, d'image et/ou de langue mis à disposition chez un utilisateur dans une ou plusieurs sources de données pour être appelés par une ou plusieurs commandes d'exécution par un ou plusieurs appareils de reproduction ou de réception, des profils d'information préalablement prescrits par l'utilisateur relatifs à une interface utilisateur, et ensuite, par suite d'une commande d'exécution de l'utilisateur, les signaux numériques correspondant à ces profils d'information prescrits, étant envoyés de la source de données à l'utilisateur, ces signaux étant restitués par l'intermédiaire d'un décodeur et la mise à disposition des signaux numériques par l'utilisateur étant commandée de façon interactive au moyen de l'interface utilisateur, **caractérisé en ce que** les signaux sont mixés, à la demande de l'utilisateur, dans la ou les sources et que ces signaux mixés sont transmis en temps réel en tant que nouveau flux de données avec un nouveau contenu, avec les étapes suivantes se déroulant en continu dans la ou les sources de données:
a) sélection des fichiers contenant les signaux numériques demandés dans la ou les sources;
b) décomposition des fichiers contenant les signaux numériques demandés en paquets individuels et décodage optionnel;
c) mixage numérique de tous les paquets de données devant être transmis simultanément au destinataire en un ou plusieurs nouveaux paquets de données;
d) codage de chaque paquet de données dans une grille de temps fixe et envoi au destinataire en temps réel.

2. Procédé selon la revendication 1, **caractérisé en ce que** le codage des données dans la source est réglé ou rectifié ultérieurement au choix conformément à la largeur de bande de transmission disponible.

3. Procédé selon la revendication 1, **caractérisé en ce que** la restitution du flux de données à partir d'une source de données est remplacée sans temporisation par commutation sur un flux de données d'une troisième source.

4. Procédé selon les revendications 1 à 3, **caractérisé par** les étapes suivantes se déroulant en complément dans la source de données et chez l'utilisateur/le destinataire :
a) demande des profils d'information sur l'interface utilisateur par le destinataire ;
b) transmission des profils d'information sur l'interface utilisateur au destinataire et mise en place de l'interface utilisateur ;
c) déclenchement et envoi d'une commande d'exécution par le destinataire pour appeler l'un des signaux numériques mémorisé dans la source de données ;
d) transmission optionnelle du logiciel du décodeur dans l'appareil de réception de l'utilisateur ;
e) réception des paquets de données avec recours optionnel à une mémoire tampon intermédiaire ;
f) décodage des signaux numériques codés reçus ;
g) restitution des signaux numériques dans le format de représentation correspondant pour l'utilisateur.

5. Procédé selon la revendication 1, **caractérisé en ce que** la sélection des signaux numériques n'est pas effectuée par une commande d'exécution de l'utilisateur, mais par un autre mécanisme de sélection dans la source de données.

6. Procédé selon la revendication 4 ou 5, **caractérisé en ce que**, lors de la transmission d'au moins un signal numérique, les étapes suivantes supplémentaires se déroulent tant dans la source de données que chez l'utilisateur/le destinataire :
aa) envoi d'une commande d'exécution pour que le destinataire appelle un autre signal numérique mémorisé dans la source de données ;
bb) sélection du fichier contenant les signaux numériques demandés;
cc) décomposition des fichiers contenant les signaux numériques demandés en paquets individuels et décodage optionnel ;
dd) exécution des étapes e) à g).

7. Procédé selon la revendication 6, **caractérisé en ce que** la sélection suivant l'étape bb) n'est pas effectuée par une commande d'exécution de l'utilisateur, mais par un autre mécanisme de sélection dans la source de données.

8. Procédé selon une ou plusieurs des revendications 1 à 7, **caractérisé en ce que** les signaux numériques mixés ou transmis sont supprimés de la procédure de traitement ou de transmission par une commande d'exécution de l'utilisateur ou un autre mécanisme de sélection dans la source de données.

9. Dispositif pour la réalisation du procédé selon la revendication 1 pour la commande de la transmission et de la restitution de signaux numériques codés entre au moins un appareil récepteur (23) et au moins une source de données, par l'intermédiaire d'une liaison de transmission de données, et leur restitution, l'appareil de réception (23) contenant au moins une interface utilisateur (6) pouvant être configurée par des données externes, un dispositif d'accueil d'un décodeur (7) ajouté de l'extérieur et une interface de sortie (8) correspondant aux signaux numériques, et la source de données contenant au moins une interface de commande (9) analysant les commandes d'exécution, une mémoire de fond (14) pour les données de signaux, un système de sélection des données (15) et un encodeur (18) pour la compression des données, **caractérisé en ce que** la source de données est en outre étendue par au moins un mixeur (17) pour le mixage de plusieurs signaux numériques et contient un serveur de transit (19) pour l'envoi des signaux numériques codés et mixés à l'appareil de réception (23).

10. Dispositif selon la revendication 9, **caractérisé en ce que** la source de données est en outre étendue par au moins un décodeur (16), qui permet de tenir à disposition dans la mémoire de fond (14) des signaux codés (en général comprimés).

11. Dispositif selon la revendication 9, **caractérisé en ce que** le codage des signaux tenus à disposition est différent du codage utilisé pour la transmission.
